# EUROPEAN PATENT APPLICATION

(11) **EP 4 372 463 A1**
(43) Date of publication of application: **22.05.2024**
(21) Application number: 22208552.4
(22) Date of filing: 21.11.2022
(51) Int. Cl.: G02F 1/35, G02F 1/355

(54) **METHOD AND SOURCE MODUL FOR GENERATING BROADBAND RADIATION**

(71) Applicant: ASML Netherlands B.V., 5500 AH Veldhoven (NL)
(72) Inventor: EDWARD, Stephen, 5500 AH Veldhoven (NL); ABDOLVAND, Amir, 5500 AH Veldhoven (NL)
(74) Representative: ASML Netherlands B.V.

(57) **Abstract**

Method and apparatus for generating broadband radiation. The method comprises directing pulsed pump radiation through a moving nonlinear medium, and thereby generating, through spectral broadening, broadband radiation from the pulsed pump radiation inside the moving nonlinear medium. The power of the pump radiation inside the moving nonlinear medium is at least a critical power for initiating filamentation within the moving nonlinear medium.

## Description

### FIELD

The present invention relates to methods and source modules for generating broadband radiation. In particular, it relates to generating broadband radiation through spectral broadening of pulsed pump radiation in a moving nonlinear medium.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-k₁ lithography may be used to process features with dimensions smaller than the classical resolution limit of a lithographic apparatus. In such process, the resolution formula may be expressed as CD = k₁×λ/NA, where λ is the wavelength of radiation employed, NA is the numerical aperture of the projection optics in the lithographic apparatus, CD is the "critical dimension" (generally the smallest feature size printed, but in this case half-pitch) and k₁ is an empirical resolution factor. In general, the smaller k₁ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

In the field of lithography, many measurement systems may be used, both within a lithographic apparatus and external to a lithographic apparatus. Generally, such a measurements system may use a radiation source to irradiate a target with radiation, and a detection system operable to measure at least one property of a portion of the incident radiation that scatters from the target. An example of a measurement system that is external to a lithographic apparatus is an inspection apparatus or a metrology apparatus, which may be used to determine properties of a pattern previously projected onto a substrate by the lithographic apparatus. Such an external inspection apparatus may, for example, comprise a scatterometer. Examples of measurement systems that may be provided within a lithographic apparatus include: a topography measurement system (also known as a level sensor); a position measurement system (for example an interferometric device) for determining position of a reticle or wafer stage; and an alignment sensor for determining a position of an alignment mark. These measurement devices may use electromagnetic radiation to perform the measurement.

Different types of radiation may be used to interrogate different types of properties of a pattern lithographically projected onto a substrate. Some measurements system may use a broadband radiation source. Generating broadband radiation with the desired wavelength range and optical properties may be challenging, and several different systems and methods exist to generate broadband radiation. One type of broadband radiation is supercontinuum radiation, which may involve using a non-linear medium (e.g. a working medium) through which pulsed (input) pump radiation is propagated to broaden a spectrum of the radiation.

### SUMMARY

According to an aspect of the current disclosure there is provided a method for generating broadband radiation. The method comprises directing pulsed pump radiation through a moving nonlinear medium, thereby generating, through spectral broadening, broadband radiation from the pulsed pump radiation inside the moving nonlinear medium. The power of the pump radiation inside the moving nonlinear medium is at least a critical power for initiating filamentation within the moving nonlinear medium.

Optionally, the broadband radiation may comprises supercontinuum radiation.

Optionally, the directing may use at least one optical element to focus the pulsed pump radiation into the moving nonlinear medium.

Optionally, the moving nonlinear medium may have a thickness in a range from 10um to 10mm, preferably 1mm to 10mm, preferably 3mm to 5mm, preferably 4mm.

Optionally, the moving nonlinear medium may be a fluid medium.

Optionally, the fluid medium may have a laminar flow.

Optionally, the moving nonlinear medium may comprise a liquid medium.

Optionally, the moving nonlinear medium may comprise a liquid sheet.

Optionally, the moving nonlinear medium may comprise a liquid jet.

Optionally, the liquid medium may comprise one or more of water, methanol, ethanol, isopropanol, D₂O.

Optionally, the liquid medium may comprise a dissolved solid medium, wherein the solid medium may comprise one or more of a salt or ions.

Optionally, the pulsed pump radiation may comprise radiation with a wavelength in a range from 400 nm to 2000 nm, optionally including one or more of 400 nm, 515 nm, 800 nm, 1030 nm, 1550 nm, 2000 nm.

Optionally, the broadband radiation may comprise wavelengths in a range from 200 nm to 2000 nm.

Optionally, the moving speed of the moving nonlinear medium may be set based on a pump pulse repetition rate and a pump pulse power such that the thermal effects on any one portion of the moving nonlinear medium do not exceed a predetermined threshold.

According to another aspect of the current disclosure there is provided method for generating broadband radiation. The method comprises directing pulsed pump radiation multiple times through a moving nonlinear medium, thereby generating through spectral broadening, broadband radiation from at least a portion of the pulsed pump radiation inside the moving nonlinear medium.

Optionally, the moving nonlinear medium may comprise a plurality of separated moving nonlinear media.

Optionally, the plurality of nonlinear media may comprise 2 to 10 moving nonlinear media.

Optionally, the plurality of moving nonlinear media may comprise a plurality of liquid jets.

Optionally, the plurality of moving nonlinear media may comprise a plurality of liquid sheets.

Optionally, each of the plurality of moving nonlinear media may have a thickness in a range from 10um to 10mm, preferably 1mm to 10mm, preferably 3mm to 5mm, preferably 4mm.

Optionally, each of the plurality of moving nonlinear media may be located within a predetermined distance in a range from 1 mm to 100 mm from a focal point of the received pump pulse radiation.

Optionally, different media of the plurality of moving nonlinear media may comprise different materials.

Optionally, one moving nonlinear medium of the plurality of moving nonlinear media may be located in a focal point of at least one optical element used in focusing the pulsed pump radiation such that the power of the pump radiation inside the one moving nonlinear medium is at least the critical power for initiating filamentation within the one moving nonlinear medium.

Optionally, the at least one optical element may comprise a resonating cavity configured to pass the pulsed pump radiation through the same moving nonlinear medium multiple times.

Optionally, the resonating cavity may comprise a pair of focusing mirrors configured to form the resonating cavity.

Optionally, the pulsed pump radiation may pass through the moving nonlinear medium in a range from 2 - 50 times.

According to another aspect of the current disclosure, there is provided a broadband radiation source module comprising a pump source module configured to deliver pulsed pump radiation at a position. The broadband radiation source module further comprises a nonlinear medium module configure to provide a moving nonlinear medium at said position to thereby generate, through spectral broadening, broadband radiation from the pulsed pump radiation inside the moving nonlinear medium, wherein a power of the pump radiation inside the moving nonlinear medium is at least a critical power for initiating filamentation within the moving nonlinear medium. The broadband source radiation module may be configured to perform any of the methods described above.

According to another aspect of the current disclosure there is provided a broadband radiation source module comprising a pump source module configured to deliver pulsed pump radiation at a position, and a nonlinear medium module configured to provide a moving nonlinear medium at said position. At least one optical element may be provided that is configured to direct the pulsed pump radiation multiple times through the moving nonlinear medium at said position. Thereby the module may generate, through spectral broadening, broadband radiation from at least a portion of the pulsed pump radiation inside the moving nonlinear medium. The broadband radiation source module may be configured to perform any of the methods described above.

According to another aspect of the current disclosure there is provided am inspection tool comprising a broadband radiation source module as described above.

According to another aspect of the current disclosure there is provided a metrology tool comprising a broadband radiation source module as described above.

According to another aspect of the current disclosure there is provided a lithographic apparatus comprising a broadband radiation source module as described above.

According to another aspect of the current disclosure there is provided a litho cell comprising a lithographic apparatus as described above.

### BRIEF DESCRIPTION OF THE DRAWINGS

Embodiments of the invention will now be described, by way of example only, with reference to the accompanying schematic drawings, in which:
- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometer metrology tool;
- Figure 5 depicts a schematic overview of a level sensor metrology tool;
- Figure 6 depicts a schematic overview of an alignment sensor metrology tool;
- Figure 7 depicts a flow chart of a method for generating broadband radiation;
- Figure 8 depicts a schematic representation of a broadband radiation source module;
- Figure 9 depicts a flow chart of a method for generating broadband radiation;
- Figure 10 depicts a schematic representation of a broadband radiation source module; and
- Figure 11 depicts a schematic representation of a broadband radiation source module.

### DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

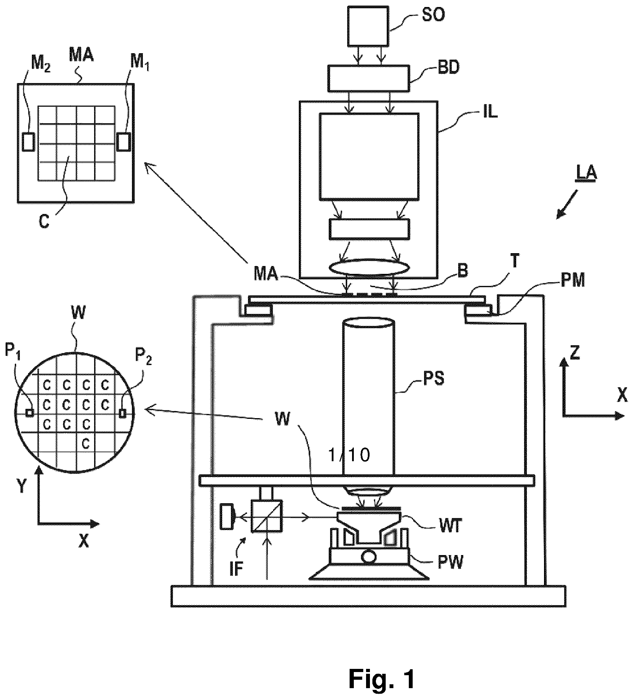

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

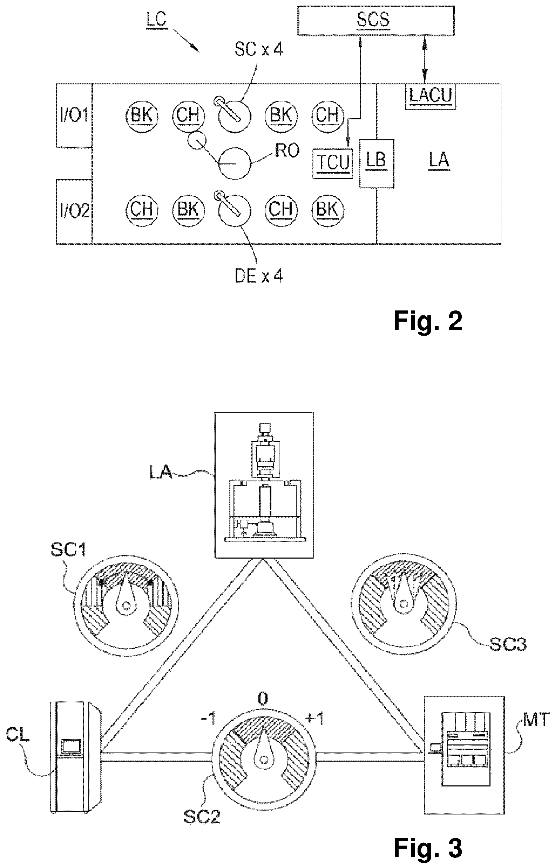

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3). Different types of metrology tools MT for measuring one or more properties relating to a lithographic apparatus and/or a substrate to be patterned will now be described.

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is a ellipsometric scatterometer. The ellipsometric scatterometer allows for determining parameters of a lithographic process by measuring scattered radiation for each polarization state. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1incorporated herein by reference in its entirety.

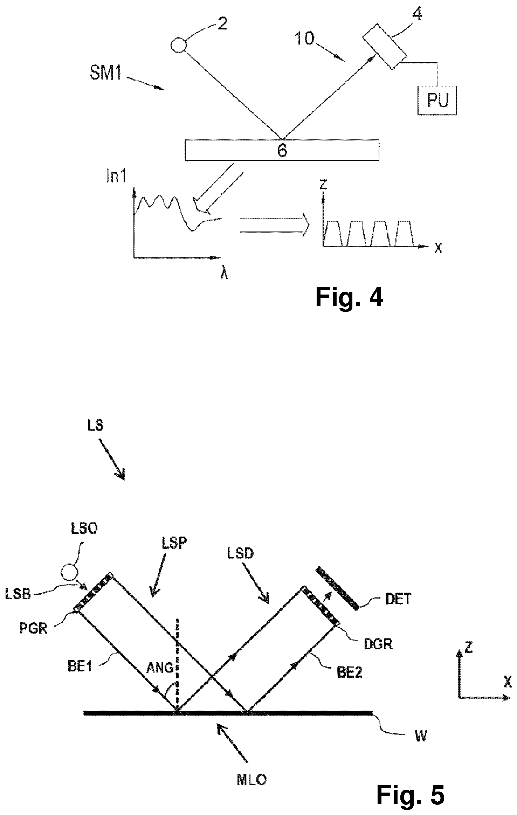

A metrology apparatus, such as a scatterometer SM1, is depicted in figure 4. It comprises a broadband (white light) radiation projector 2 which projects radiation onto a substrate 6. The reflected or scattered radiation is passed to a spectrometer detector 4, which measures a spectrum 10 (i.e. a measurement of intensity In1 as a function of wavelength λ) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 4. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

In lithographic processes, it is desirable to make frequently measurements of the structures created, e.g., for process control and verification. Various tools for making such measurements are known, including scanning electron microscopes or various forms of metrology apparatuses, such as scatterometers. Examples of known scatterometers often rely on provision of dedicated metrology targets, such as underfilled targets (a target, in the form of a simple grating or overlapping gratings in different layers, that is large enough that a measurement beam generates a spot that is smaller than the grating) or overfilled targets (whereby the illumination spot partially or completely contains the target). Further, the use of metrology tools, for example an angular resolved scatterometter illuminating an underfilled target, such as a grating, allows the use of so-called reconstruction methods where the properties of the grating can be calculated by simulating interaction of scattered radiation with a mathematical model of the target structure and comparing the simulation results with those of a measurement. Parameters of the model are adjusted until the simulated interaction produces a diffraction pattern similar to that observed from the real target.

Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers can measure in one image multiple targets from multiple gratings using light from soft x-ray and visible to near-IR wave range.

A topography measurement system, level sensor or height sensor, and which may be integrated in the lithographic apparatus, is arranged to measure a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband radiation source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

The position measurement system PMS may comprise any type of sensor that is suitable to determine a position of the substrate support WT. The position measurement system PMS may comprise any type of sensor that is suitable to determine a position of the mask support MT. The sensor may be an optical sensor such as an interferometer or an encoder. The position measurement system PMS may comprise a combined system of an interferometer and an encoder. The sensor may be another type of sensor, such as a magnetic sensor. a capacitive sensor or an inductive sensor. The position measurement system PMS may determine the position relative to a reference, for example the metrology frame MF or the projection system PS. The position measurement system PMS may determine the position of the substrate table WT and/or the mask support MT by measuring the position or by measuring a time derivative of the position, such as velocity or acceleration.

The position measurement system PMS may comprise an encoder system. An encoder system is known from for example, United States patent application US2007/0058173A1, filed on September 7, 2006, hereby incorporated by reference. The encoder system comprises an encoder head, a grating and a sensor. The encoder system may receive a primary radiation beam and a secondary radiation beam. Both the primary radiation beam as well as the secondary radiation beam originate from the same radiation beam, i.e., the original radiation beam. At least one of the primary radiation beam and the secondary radiation beam is created by diffracting the original radiation beam with the grating. If both the primary radiation beam and the secondary radiation beam are created by diffracting the original radiation beam with the grating, the primary radiation beam needs to have a different diffraction order than the secondary radiation beam. Different diffraction orders are, for example,+1st order, -1st order, +2nd order and -2nd order. The encoder system optically combines the primary radiation beam and the secondary radiation beam into a combined radiation beam. A sensor in the encoder head determines a phase or phase difference of the combined radiation beam. The sensor generates a signal based on the phase or phase difference. The signal is representative of a position of the encoder head relative to the grating. One of the encoder head and the grating may be arranged on the substrate structure WT. The other of the encoder head and the grating may be arranged on the metrology frame MF or the base frame BF. For example, a plurality of encoder heads are arranged on the metrology frame MF, whereas a grating is arranged on a top surface of the substrate support WT. In another example, a grating is arranged on a bottom surface of the substrate support WT, and an encoder head is arranged below the substrate support WT.

The position measurement system PMS may comprise an interferometer system. An interferometer system is known from, for example, United States patent US6,020,964, filed on July 13, 1998, hereby incorporated by reference. The interferometer system may comprise a beam splitter, a mirror, a reference mirror and a sensor. A beam of radiation is split by the beam splitter into a reference beam and a measurement beam. The measurement beam propagates to the mirror and is reflected by the mirror back to the beam splitter. The reference beam propagates to the reference mirror and is reflected by the reference mirror back to the beam splitter. At the beam splitter, the measurement beam and the reference beam are combined into a combined radiation beam. The combined radiation beam is incident on the sensor. The sensor determines a phase or a frequency of the combined radiation beam. The sensor generates a signal based on the phase or the frequency. The signal is representative of a displacement of the mirror. In an embodiment, the mirror is connected to the substrate support WT. The reference mirror may be connected to the metrology frame MF. In an embodiment, the measurement beam and the reference beam are combined into a combined radiation beam by an additional optical component instead of the beam splitter.

In the manufacture of complex devices, typically many lithographic patterning steps are performed, thereby forming functional features in successive layers on the substrate. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks. Each mark is a structure whose position can be measured at a later time using a position sensor, typically an optical position sensor. The position sensor may be referred to as "alignment sensor" and marks may be referred to as "alignment marks". A mark may also be referred to as a metrology target.

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

A mark, or alignment mark, may comprise a series of bars formed on or in a layer provided on the substrate or formed (directly) in the substrate. The bars may be regularly spaced and act as grating lines so that the mark can be regarded as a diffraction grating with a well-known spatial period (pitch). Depending on the orientation of these grating lines, a mark may be designed to allow measurement of a position along the X axis, or along the Y axis (which is oriented substantially perpendicular to the X axis). A mark comprising bars that are arranged at +45 degrees and/or -45 degrees with respect to both the X- and Y-axes allows for a combined X- and Y- measurement using techniques as described in US2009/195768A, which is incorporated by reference.

The alignment sensor scans each mark optically with a spot of radiation to obtain a periodically varying signal, such as a sine wave. The phase of this signal is analyzed, to determine the position of the mark and, hence, of the substrate relative to the alignment sensor, which, in turn, is fixated relative to a reference frame of a lithographic apparatus. So-called coarse and fine marks may be provided, related to different (coarse and fine) mark dimensions, so that the alignment sensor can distinguish between different cycles of the periodic signal, as well as the exact position (phase) within a cycle. Marks of different pitches may also be used for this purpose.

Measuring the position of the marks may also provide information on a deformation of the substrate on which the marks are provided, for example in the form of a wafer grid. Deformation of the substrate may occur by, for example, electrostatic clamping of the substrate to the substrate table and/or heating of the substrate when the substrate is exposed to radiation.

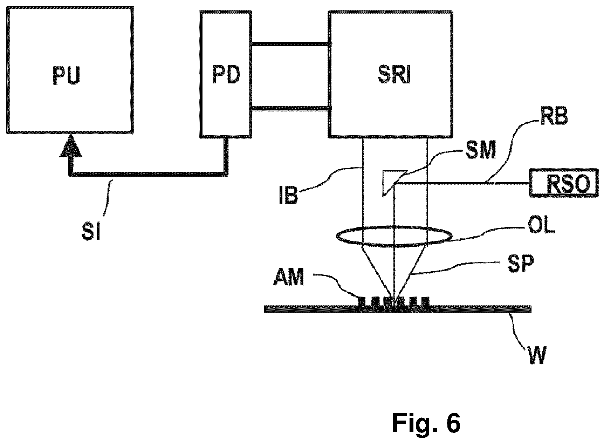

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and de-multiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology and/or inspection tools (also referred to as measurement tools) may use different types of radiation to obtain data. Some measurement tools may use broadband radiation, such as supercontinuum radiation. Depending on the range of wavelengths and properties of a broadband source, different methods may be used to generate the radiation. Often, nonlinear effects may be used as part of the generation, for example be having pump radiation interact with a nonlinear medium. In order for nonlinear effects to be significant, high localized pump radiation intensities inside the nonlinear medium may be required. One known nonlinear effect is filamentation. Filamentation may refer to a situation in which a powerful radiation pulse self-focuses until it reaches localized intensities that are so high they may ionize the medium in its path. This may result in a narrow column of plasma. The formation of the plasma may cause local defocusing that may halt the collapse of the beam. Filamentation may be understood as an interplay between several (nonlinear) processes, including diffraction, self-focusing, and plasma defocusing.

Filamentation of intense radiation pulses in bulk media such as solids and crystals, e.g. fused silica, sapphire, YAG, gases, or liquids) may be seen as a way to obtain high localized radiation intensities. This may enable robust, alignment-free, and/or low-cost radiation confinement, e.g. for supercontinuum generation. By focusing an input radiation beam (e.g. laser beam) that meets the known critical power requirements for filamentation into a bulk medium, the beam may create a waveguide under its own action (i.e. the radiation beam achieves filamentation). This filamentation may lead to achieving the high localized intensities required for spectral broadening and the resulting directional supercontinuum broadband radiation generation. A first challenge with filamentation is that the critical power required to achieve it may be high. This may lead to damage to the medium in which the filamentation occurs (e.g. thermal damage).

Filamentation may be achieved in different media. Depending on the medium, the critical power criteria, and corresponding required properties of the input radiation may differ. An example input source may have the following properties: approx.. 0.1 µJ - 10 µJ energy (or 0.1 µJ- 1 µJ energy), approx.. 100 fs - 500 fs pulses, and approx.. 1 - 10 MHz repetition rate. However, other sources that meet the critical power requirements for a particular medium may be used. Power scalability of filamentation in transparent solids may be limited by input radiation induced damage, when the power exceeds the damage threshold of the transparent solid material. To overcome this limitation, other materials may be considered.

A first option is to consider filamentation in a gaseous medium. Gases may be immune to laser induced damage. However, compared to solid materials used for self-focusing, gases may require extremely high input radiation intensities to reach critical power for filamentation. Furthermore, at high repetition rates, gases may suffer from turbulence due to ionization-induced thermal effects. Filamentation in gases is for example described in "Sub 10-fs supercontinuum radiation generated by filamentation of few-cycle 800 nm pulses in argon" (S. A. Trushin et al, Optica, 2007). The requirement for high energy input radiation sources may also lead to bulky and expensive setups for broadband generation.

A second option is to consider filamentation in liquids, for example as described in "supercontinuum generation in water by intense, femtosecond laser pulses under anomalous chromatic dispersion" (P. Vasa et a, Phys Rev A, 2014). Similar to gases, liquids may be immune to laser induced damage. Compared to gases, liquids may also offer higher optical nonlinearities, which may reduce the required critical power to achieve filamentation. However, at high powers, the liquids may suffer from thermal effects and bubble formation due to the interaction of the ultrashort high-energy pulses with the liquids. This may make the setup unsuitable for high-repetition setups and sensitive to thermal-induced failure.

Proposed herein are methods, systems, and apparatus for improving spectral broadening without using waveguiding structures (such as e.g. a photonic crystal fibre). The embodiments described herein may have improved power scalability and/or an improved (i.e. extended) spectral output range.

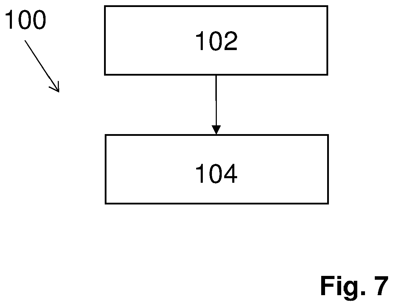

Figure 7 depicts a flow chart of a method 100 for generating broadband radiation. Pulsed pump radiation may be directed 102 through a moving nonlinear medium (e.g. a fluid, such as a liquid jet or gas jet). This generates 104 broadband radiation from the pulsed pump radiation inside the moving nonlinear medium, through spectral broadening. In this method, the power of the pulsed pump radiation inside the moving nonlinear medium is at least the critical power for initiating filamentation within the moving nonlinear medium. By "moving" it is meant that position of the nonlinear medium does not substantially move, but the material that forms the nonlinear medium moves (e.g flow).

The pulsed pump radiation may be provided by a pump source module. The moving nonlinear medium may be provided by a nonlinear medium module. Optical elements may be used to direct the pulsed pump radiation through the moving nonlinear medium. By directing the radiation through the moving nonlinear medium, the radiation interacts with the moving nonlinear medium. Once generated, an output module may output the broadband radiation for providing as output radiation by the broadband source.

The term 'moving' medium may indicate that the specific material that makes up the medium that interacts with radiation changes over time while the overall position of the medium remains the same. Examples of a moving medium may include a flow such as a river or a liquid or gas jet, a wheel rotating in place, etc. In relation to the moving nonlinear medium described herein, the position of the nonlinear medium as a whole may remain static or substantially the same, at least around an area where the radiation interacts with the nonlinear medium.

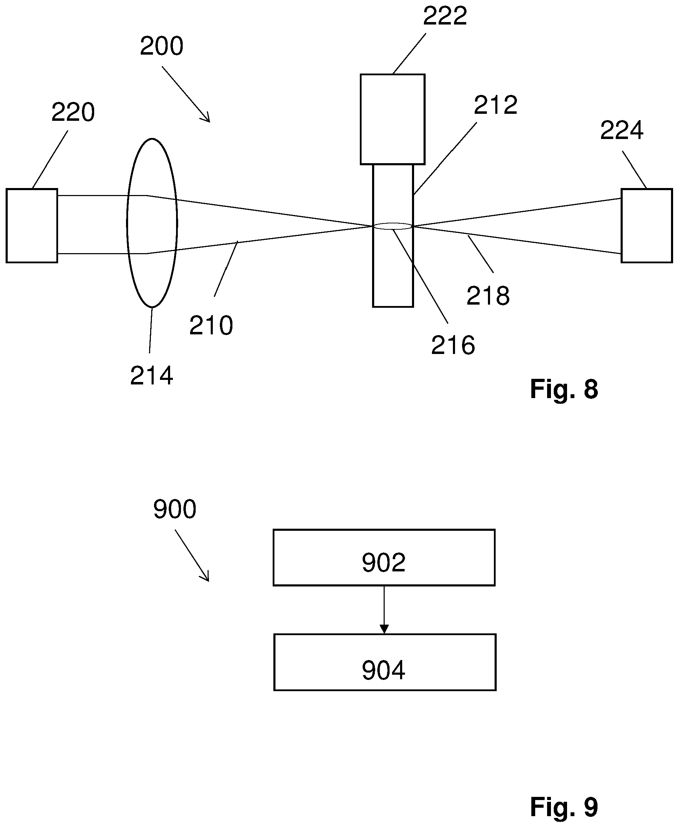

A method according to figure 7 may for example be achieved in a broadband radiation source module 200 as depicted in figure 8. The source module 200 comprises a pump source module 220 configured to deliver pulsed pump radiation 210 at a position. The source module further comprises a nonlinear medium module 222 configured to provide a moving nonlinear medium 216 at the position. At least one optical element 214 may be provided to direct the delivered pulsed pump radiation 210 through the moving nonlinear medium 212 at the position. The source module is configured to thereby generate broadband radiation 218 through spectral broadening of the pulsed pump radiation inside the moving nonlinear medium at the position. The power of the pulsed pump radiation inside the moving nonlinear medium may be at least the critical power for initiating filamentation 216 within the moving nonlinear medium. The source module may further comprise an output module 224 configured to output the broadband radiation from the source module 200.

Filamentation inside a moving nonlinear medium may have a significant advantage of reducing the interaction of the radiation with any specific material. As a result, thermal effects are reduced, so that the material is able to function without suffering detrimental heating-related changes of characteristics and/or damage. As a result, even when filamentation is achieved, leading to stronger localized intensities, the material of the nonlinear medium gets replaced before detrimental thermal effects/radiation-induced damage can occur. The moving nonlinear medium may have a laminar flow.

In some implementations, the speed of movement of the nonlinear medium may be such that any material in the medium does not interact with two consecutive pulses of the pulsed pump radiation. In other instances, the speed may be such that at least some of the material in the moving nonlinear medium interacts with at least 2 pulses. The speed may be set such that the amount of interaction between any of the material of the moving nonlinear medium and the radiation is such that thermal effects are kept below a predetermined threshold for meeting performance of the method and source module.

In order to achieve filamentation, the at least one optical element 214 may be configured to focus the pulsed pump radiation onto the moving nonlinear medium 212. By focusing the radiation inside the medium, this may assist in achieving the critical power required in order to initiate filamentation. The filamentation may achieve increased nonlinear interaction, and therefore may achieve more spectral broadening. Filamentation may lead to increased amounts of spectral broadening over a given propagation distance compared to spectral broadening over the same given distance in a setup not achieving filamentation. Because of this, the inventors realised that it may be possible to build a broadband source with a reduced interaction length with the nonlinear medium compared to setups not using filamentation. There is provided herein a method and broadband radiation source module in which the moving nonlinear medium has a thickness in a range from 10 µm to 10 mm. In some implementations, the thickness may be in a range from 1 mm to 10 mm. In some implementations the thickness may be in a range from 3 mm to 5 mm. In some implementations the thickness may be approximately 4 mm. The thickness as described herein may be a dimension of the nonlinear medium along a propagation direction of the radiation through the nonlinear medium. The thickness of the nonlinear medium as described herein may be a measure of the interaction length of the pulsed pump radiation with the moving nonlinear medium. The thickness selected for the medium may further depend on the radiation pulse duration, radiation beam size, and any lens used to direct the radiation beam into the linear medium.

An advantage of providing the moving nonlinear medium at a limited thickness, may be a further reduction in thermal effects resulting from the interaction of the radiation with the nonlinear medium. This reduction in thermal effects is on top of the reduction as a result of the nonlinear medium being a moving nonlinear medium. This reduction in thermal effects/damage may further support the use of a liquid or gas medium as the nonlinear medium. The use of filamentation means the broadband source may still achieve significant spectral broadening despite the shorter interaction length of the pulsed pump radiation with the moving nonlinear medium.

The moving nonlinear medium may be a fluid medium. The fluid medium may be a liquid medium or a gas medium. The moving nonlinear medium may comprise a liquid jet. The moving nonlinear medium may comprise a gas jet. The moving nonlinear medium may comprise a liquid sheet. A liquid sheet may for example be formed by two liquid jets made to collide at an angle (M. Ekimova et al, . "A liquid flat-jet system for solution phase soft-x-ray spectroscopy", Struct. Dyn. 2, 054301, 2015). The liquid may comprise one or more of water (H₂O), methanol ethanol, isopropanol, and/or deuterium oxide (D₂O), including a mixture of any of the above. The moving nonlinear medium may comprise a solid medium, and/or a solid medium dissolved in a fluid (e.g. various salts dissolved in liquid).

In a particular implementation, the method for providing broadband radiation may comprise achieving filamentation of the pulsed pump radiation in a single liquid jet (or liquid sheet). The input radiation may be laser radiation, which may have a pulse power such that the critical power for initiating filamentation is achieved when the laser radiation is focused onto the liquid jet. Because the liquid inside the jet is constantly refreshing, thermal effects (e.g. bubble formation) are not of a concern. The thickness of the liquid jet may be adjustable to tune interaction of the radiation with the nonlinear medium.

Creating a thin liquid layer through a jet or a sheet (a sheet for example based on the methods described in *Ekimova et al*), may be preferable over creating thin liquid layers for example using a cuvette or other walled container. This may be because no material lies between the radiation and the moving no-linear medium. Such additional materials may be undesirable as they may lead to losses (e.g. reflection/absorption), may experience unwanted nonlinear effects, may deform the radiation beam, may be damaged by the radiation, etc. Another advantage of using a liquid sheet is that the radiation-liquid interaction region is refreshed quickly due to the flow.

The pulsed pump radiation may be provided by a femtosecond laser. A femtosecond laser may emit femtosecond laser pulses (1 - 10,000 fs). The laser may emit radiation with wavelengths in a range from 400 nm - 2000 nm. When focused onto the nonlinear medium, this may achieve intensities which are sufficient to achieve filamentation, resulting in spectral broadening.

The moving speed of the moving nonlinear medium may be set such that thermal effects and/or any other damaging effects from the radiation that accumulate by continued exposure are kept below a threshold. The threshold may be predetermined, and may be set based on when performance-reducing affects may start to occur in the nonlinear medium as a result of radiation exposure. The actual speed required may depend on other properties of the source module, such as pulse repetition rate, pulse power, thickness of the medium, material properties of the medium. The rate of cooling achieved through moving the nonlinear medium should be sufficiently high so as to cope with the rate of heating caused by the incident pulsed pump radiation. The threshold for radiation effects may for example be determined experimentally, through simulation, and/or through calculation.

The resulting broadband radiation may comprise supercontinuum radiation. The broadband radiation may comprise radiation in a range from 200 nm - 2000 nm. The broadband radiation may be provided by the source as output radiation. An output module may comprise optical elements for manipulating the broadband radiation (e.g. focus, filter, shape).

In the embodiment described above, a single moving nonlinear medium is provided, and spectral broadening is achieved using filamentation of the radiation inside the nonlinear medium. Due to the increased broadening effects resulting from the filamentation, a single pass of the radiation through a nonlinear medium may produce enough broadband radiation to provide as output of a broadband radiation source. In some instances, a higher proportion of conversion of the pump radiation to broadband radiation may be desirable. Or, in some instances, a setup not requiring filamentation may be preferable. For these cases, a source setup in which the pulsed pump radiation passes through a moving nonlinear medium multiple times may be preferable.

There is provided a method for generating broadband radiation 900. The method comprises directing 902 pulsed pump radiation multiple times through a moving nonlinear medium. At each pass through a nonlinear medium, broadband radiation is generated 904 from at least a portion of the pulsed pump radiation, through spectral broadening inside the moving nonlinear medium. The broadband radiation may be provided as output radiation.

An advantage of using a method of broadband generation is that it is able to achieve the advantages of reducing thermal effects and radiation induced damage without needing to reach critical power for initiating filamentation. By having a moving nonlinear medium the refresh of material and associated cooling are achieved. By having multiple passes through a moving nonlinear medium, the amount of pulsed pump radiation that is converted into broadband radiation is increased. One or more optical elements may be provided to direct the radiation through the moving nonlinear media.

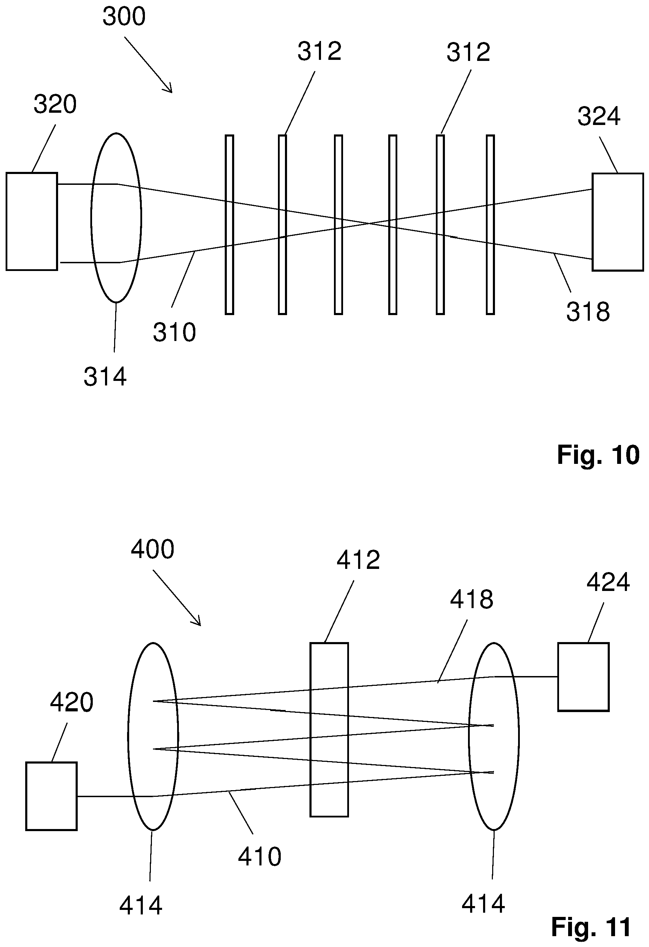

Figure 10 depicts a schematic example representation of a broadband radiation source module 300 having multiple passes of pulsed pump radiation 310 through a moving nonlinear medium 312. Broadband radiation may for example pass through a moving nonlinear medium in a range from 2 - 50 times. This may involve multiple passes through the same moving nonlinear medium and/or passes through different moving nonlinear media. The module 300 comprises a plurality of moving nonlinear media 312. Pump source module 320 provides input pulsed pump radiation 310 that is directed through the plurality of moving nonlinear media. The directing may be performed by at least one optical element 314. A portion of the pulsed pump radiation is converted into broadband radiation 318 in each of the plurality of moving nonlinear media 312. An output module 324 may collect the generated broadband radiation 318 to provide it as output radiation.

An advantage of providing multiple moving nonlinear media is that there is increased cooling compared to using a single bulk moving nonlinear medium without separating space in between. The moving nonlinear medium may have the same properties as described in relation to figures 7 and 8 above. Specifically, the moving nonlinear medium may comprise a plurality of liquid jets, or liquid sheets, as described above. Each of the moving nonlinear media may have a thickness of 10 µm to 10 mm. Preferably, each of the moving nonlinear media may have a thickness in a range of 10 µm to 1 mm. The source module may comprise from 2 - 10 individual moving nonlinear media (e.g. form 2 - 10 liquid jets).

Each of the moving nonlinear media may be placed within a predetermined distance from a focal point of the radiation. This may be because the localized intensity inside the moving nonlinear medium needs to be high in order to achieve substantial nonlinear effects. Therefore, the moving nonlinear medium, specifically each of the moving nonlinear media, may be positioned within a predetermined distance from a focal point of the pulsed pump radiation. The predetermined distance may be in a range from 1 mm to 100 mm. The predetermined distance may be determined may be determined by optical properties of the system, such as beam size, focal length, etc. The predetermined distance may be in the order of 1 - 10 times the Rayleigh range of the radiation. The tighter the focus of the beam, the shorter its focal length, and the shorter the suitable distance around the focal point suitable for placing the moving nonlinear medium. The moving nonlinear media may be placed on either or both sides of a focal point of the moving nonlinear medium. That is to say, a moving nonlinear medium may be placed between an input side and a focal point of the pulsed pump radiation, and/or between a focal point and an output side of the broadband radiation. The distance between the plurality of moving nonlinear media may be set such that all of the moving nonlinear media are located within the predetermined distance from the focal point. A lower range of a distance between neighboring moving nonlinear media may be set based on cooling requirements. As a result, it may depend on the cooling properties of the moving nonlinear medium and on the intensity of the beam.

In some implementations, a moving nonlinear medium may be placed in the focal point of the pulsed pump radiation for setups in which multiple passes of the pulsed pump radiation through moving nonlinear media are designed. Optionally, the power of the radiation at this focal point may reach the critical power for initiating filamentation. However, this is not essential and a multi-jet/multipass setup as described herein may function without filamentation.

In an example implementation, a source module is provided in which the moving nonlinear medium comprises a plurality of liquid jets (multi-jet). By having liquid jets, the thermal/damage threshold of the setup is increased compared to non-moving nonlinear media. By using multiple jets, the interaction length of the radiation with the moving nonlinear medium is increased. As a result, the effective nonlinearity experienced by an ultrashort pulse of the pump radiation is increased.

Figure 11 depicts a schematic representation of a broadband radiation source module 400 comprising a multipass cell. Input module 420 provides pulsed pump radiation 410 which is passed through a moving nonlinear medium 412 multiple times. The at least one optical element 414 may comprise a pair of focusing mirrors, or any other optical configuration that directs the pulsed pump radiation beam through the moving nonlinear medium 412 multiple times (multipass). The optical elements 414 may for example form a resonating cavity. The pulsed pump radiation 410 may pass through the moving nonlinear medium 3 - 10 times before being collected and output 424 outside the cavity. The optical elements 414 may for example comprise focusing optics to refocus the pump radiation beam into the moving nonlinear medium for each pass. During each of the passes, a portion of the pump radiation is converted to broadband radiation 418. The generated radiation 418 may be collected by output module 424 and provided as output by the source module.

It is noted that the radiation beam is represented by a single line in the source module setup of figure 11. In the source modules of figures 8 and 10, the radiation beam is represented by 2 lines illustrating a beam shape. This difference is merely in order to simplify the schematic of figure 11, and is not intended to indicate a difference between the radiation of figures 8 and 10, and figure 11, respectively. While not illustrated by the line of figure 11, the radiation beam in figure 11 may also be focused, e.g. for one or more passes through the moving nonlinear medium.

Advantages of the source modules and methods described herein may include the lack of need of sophisticated waveguides or fibres for broadband/supercontinuum radiation generation. The setup may have an improved lifetime due to the constant refreshing the moving nonlinear medium. The setups may experience low loss of power, compared to other setups. Some radiation may be reflected by the moving nonlinear medium, but there are comparatively fewer reflective surfaces to other broadband generating setups. The setups also have good power scalability, as damage threshold is less of a concern (e.g. for liquids) and because the nonlinear medium moves. A further advantage may be the cost of goods, as some of the proposed nonlinear media (e,g, water) are relatively low cost.

The features of any of the source modules and methods for generating broadband radiation as described herein may be combined, unless mutually exclusive.

Further embodiments of the invention are disclosed in the list of numbered clauses below:
1. A method for generating broadband radiation, comprising:
   directing pulsed pump radiation through a moving nonlinear medium, thereby generating, through spectral broadening, broadband radiation from the pulsed pump radiation inside the moving nonlinear medium, wherein the power of the pump radiation inside the moving nonlinear medium is at least a critical power for initiating filamentation within the moving nonlinear medium.
2. A method according to clause 1, wherein the broadband radiation comprises supercontinuum radiation.
3. A method according to any of the preceding clauses, wherein the directing uses at least one optical element to focus the pulsed pump radiation into the moving nonlinear medium.
4. A method according to any of the preceding clauses, wherein the moving nonlinear medium has a thickness in a range from 10um to 10mm, preferably 1mm to 10mm, preferably 3mm to 5mm, preferably 4mm
5. A method according to any of the preceding clauses, wherein the moving nonlinear medium is a fluid medium.
6. A method according to clause 5 wherein the fluid medium has a laminar flow.
7. A method according to clause 5 or 6, wherein the moving nonlinear medium comprises a liquid medium.
8. A method according to clause 7, wherein the moving nonlinear medium comprises a liquid sheet.
9. A method according to clause 7, wherein the moving nonlinear medium comprises a liquid jet.
10. A method according to any of clauses 7 - 9, wherein the liquid medium comprises one or more of water, methanol, ethanol, isopropanol, D₂O.
11. A method according to any of clauses 7 - 10, wherein the liquid medium comprises a dissolved solid medium, wherein the solid medium comprises one or more of a salt or ions.
12. A method according to any of the preceding clauses, wherein the pulsed pump radiation comprises radiation with a wavelength in a range from 400 nm to 2000 nm, optionally including one or more of 400 nm, 515 nm, 800 nm, 1030 nm, 1550 nm, 2000 nm.
13. A method according to any of the preceding clauses, wherein the broadband radiation comprises wavelengths in a range from 200 nm to 2000 nm.
14. A method according to any of the preceding clauses, wherein the moving speed of the moving nonlinear medium is set based on a pump pulse repetition rate and a pump pulse power such that the thermal effects on any one portion of the moving nonlinear medium do not exceed a predetermined threshold.
15. A method for generating broadband radiation, the method comprising: directing pulsed pump radiation multiple times through a moving nonlinear medium, thereby generating through spectral broadening, broadband radiation from at least a portion of the pulsed pump radiation inside the moving nonlinear medium.
16. A method according to clause 15, wherein the moving nonlinear medium comprises a plurality of separated moving nonlinear media.
17. A method according to clause 16, wherein the plurality of nonlinear media comprise 2 to 10 moving nonlinear media.
18. A method according to any of clauses 16 - 17, wherein the plurality of moving nonlinear media comprise a plurality of liquid jets.
19. A method according to any of clauses 16 - 17, wherein the plurality of moving nonlinear media comprise a plurality of liquid sheets.
20. A method according to any of clauses 16 - 19, wherein each of the plurality of moving nonlinear media has a thickness in a range from 10um to 10mm, preferably 1mm to 10mm, preferably 3mm to 5mm, preferably 4mm
21. A method according to any of clauses 13 - 17, wherein each of the plurality of moving nonlinear media is located within a predetermined distance in a range from 1 mm to 100 mm from a focal point of the received pump pulse radiation.
22. A method according to any of clauses 16 - 21, wherein different media of the plurality of moving nonlinear media comprise different materials.
23. A method according to any of clauses 16 - 22, wherein one moving nonlinear medium of the plurality of moving nonlinear media is located in a focal point of at least one optical element used in focusing the pulsed pump radiation such that the power of the pump radiation inside the one moving nonlinear medium is at least the critical power for initiating filamentation within the one moving nonlinear medium.
24. A method according to clause 23, wherein the at least one optical element comprises a resonating cavity configured to pass the pulsed pump radiation through the same moving nonlinear medium multiple times.
25. A method according to clause 24, wherein the resonating cavity comprises a pair of focusing mirrors configured to form the resonating cavity.
26. A method according to any of clauses 24 - 25, wherein the pulsed pump radiation passes through the moving nonlinear medium in a range from 2 - 50 times.
27. A broadband radiation source module comprising:
   a pump source module configured to deliver pulsed pump radiation at a position;
   a nonlinear medium module configure to provide a moving nonlinear medium at said position to thereby generate, through spectral broadening, broadband radiation from the pulsed pump radiation inside the moving nonlinear medium, wherein a power of the pump radiation inside the moving nonlinear medium is at least a critical power for initiating filamentation within the moving nonlinear medium.
28. A broadband radiation source module comprising:
   a pump source module configured to deliver pulsed pump radiation at a position;
   a nonlinear medium module configured to provide a moving nonlinear medium at said position;
   at least one optical element configured to direct the pulsed pump radiation multiple times through the moving nonlinear medium at said position, configured to thereby generate, through spectral broadening, broadband radiation from at least a portion of the pulsed pump radiation inside the moving nonlinear medium.
29. An inspection tool comprising a broadband radiation source module according to clause 27 or 28.
30. A metrology tool comprising a broadband radiation source module according to clause 27 or 28.
31. A lithographic apparatus comprising a broadband radiation source module according to clause 27 or 28.
32. A litho cell comprising a lithographic apparatus according to clause 31.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

Although specific reference is made to "metrology apparatus / tool / system" or "inspection apparatus / tool / system", these terms may refer to the same or similar types of tools, apparatuses or systems. E.g. the inspection or metrology apparatus that comprises an embodiment of the invention may be used to determine characteristics of structures on a substrate or on a wafer. E.g. the inspection apparatus or metrology apparatus that comprises an embodiment of the invention may be used to detect defects of a substrate or defects of structures on a substrate or on a wafer. In such an embodiment, a characteristic of interest of the structure on the substrate may relate to defects in the structure, the absence of a specific part of the structure, or the presence of an unwanted structure on the substrate or on the wafer.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A method for generating broadband radiation, comprising:
directing pulsed pump radiation through a moving nonlinear medium, thereby generating, through spectral broadening, broadband radiation from the pulsed pump radiation inside the moving nonlinear medium, wherein the power of the pump radiation inside the moving nonlinear medium is at least a critical power for initiating filamentation within the moving nonlinear medium.

2. A method according to claim 1, wherein the broadband radiation comprises supercontinuum radiation.

3. A method according to any of the preceding claims, wherein the directing uses at least one optical element to focus the pulsed pump radiation into the moving nonlinear medium.

4. A method according to any of the preceding claims, wherein the moving nonlinear medium has a thickness in a range from 10um to 10mm, preferably 1mm to 10mm, preferably 3mm to 5mm, preferably 4mm

5. A method according to any of the preceding claims, wherein the moving nonlinear medium is a fluid medium.

6. A method according to claim 5 wherein the fluid medium has a laminar flow.

7. A method according to claim 5 or 6, wherein the moving nonlinear medium comprises a liquid medium.

8. A method according to claim 7, wherein the moving nonlinear medium comprises a liquid sheet.

9. A method according to claim 7, wherein the moving nonlinear medium comprises a liquid jet.

10. A method according to any of claims 7 - 9, wherein the liquid medium comprises one or more of water, methanol, ethanol, isopropanol, D₂O.

11. A method according to any of the preceding claims, wherein the pulsed pump radiation comprises radiation with a wavelength in a range from 400 nm to 2000 nm, optionally including one or more of 400 nm, 515 nm, 800 nm, 1030 nm, 1550 nm, 2000 nm.

12. A method according to any of the preceding claims, wherein the broadband radiation comprises wavelengths in a range from 200 nm to 2000 nm.

13. A method according to any of the preceding claims, wherein the moving speed of the moving nonlinear medium is set based on a pump pulse repetition rate and a pump pulse power such that the thermal effects on any one portion of the moving nonlinear medium do not exceed a predetermined threshold.

14. A broadband radiation source module comprising:
a pump source module configured to deliver pulsed pump radiation at a position;
a nonlinear medium module configure to provide a moving nonlinear medium at said position to thereby generate, through spectral broadening, broadband radiation from the pulsed pump radiation inside the moving nonlinear medium, wherein a power of the pump radiation inside the moving nonlinear medium is at least a critical power for initiating filamentation within the moving nonlinear medium.

15. An inspection or metrology tool comprising a broadband radiation source module according to claim 14.
